# EUROPEAN PATENT SPECIFICATION

(11) **EP 3 232 010 B1**
(45) Date of publication and mention of the grant of the patent: **19.06.2019**
(21) Application number: 14908948.4
(22) Date of filing: 24.12.2014
(51) Int. Cl.: F01D 11/02, F01D 9/04, F01D 11/00, F16J 15/447

(54) **NOZZLE STRUCTURE AND ROTARY MACHINE**
LEITSCHAUFEL UND DREHMASCHINE
DISTRIBUTEUR ET MACHINE ROTATIVE

(43) Date of publication of application: 18.10.2017
(73) Proprietor: Mitsubishi Heavy Industries Compressor Corporation, Minato-ku Tokyo 108-0014 (JP)
(72) Inventor: TERADA, Katsumi, Hiroshima-shi Hiroshima 733-8553 (JP)
(74) Representative: Studio Torta S.p.A.
(86) International application number: PCT/JP2014/084037
(87) International publication number: WO 2016/103340

(56) References cited:
- EP-A2- 1 760 270
- AU-A1- 2006 252 172
- JP-A- S5 918 207
- JP-A- S5 918 207
- JP-A- S61 138 803
- JP-A- S61 138 803
- JP-U- S6 372 371
- JP-U- S6 372 371
- JP-U- H01 119 802
- US-A- 5 603 510
- US-A1- 2004 096 319
- US-A1- 2005 104 300
- US-A1- 2008 136 115

## Description

### [Technical Field]

The present invention relates to a nozzle structure and a rotary machine including the same.

### [Background Art]

Generally, in rotary machines such as steam turbines, blade trains provided on outer peripheral surfaces of rotors and vane trains provided on inner peripheral surfaces of casings are alternately arranged in axes of turbines. Thus, steam flow paths are formed inside casings. Here, in order to improve steam turbine efficiency, it is important to reduce steam leakage from a space between an inner peripheral side end of a vane and a rotor surface.

A device disclosed in Patent Literature 1 is known as an example of such technology. A steam turbine disclosed in Patent Literature 1 includes a diaphragm inner ring provided on an inner peripheral side of a vane train via an inner peripheral side constitution section, and a labyrinth packing fixedly supported by the diaphragm inner ring at the inner peripheral side. The labyrinth packing covers an outer peripheral surface of a rotor at an interval.

### [Citation List]

### [Patent Literature]

[Patent Literature 1] Japanese Unexamined Patent Application, First Publication No. 2013-122221
[Patent Literature 2] (JP S61-138803 A), which discloses the preamble of the subject-matter of independent claim 1.
[Patent Literature 3] (JP S63-72371 U)
[Patent Literature 4] (EP 1760270 A2)
[Patent Literature 5] (AU 2006252172 A1)
[Patent Literature 6] (US 5603510 A)
[Patent Literature 7] (US 2004/096319 A1)
[Patent Literature 8] (US 2005/104300 A1), and
[Patent Literature 9] (US 2008/136115 A1).

### [Summary of Invention]

### [Technical Problem]

However, in the device disclosed in Patent Literature 1, a gap occurs between the diaphragm inner ring and the inner peripheral side constitution section. Steam is likely to leak from the gap.

In addition, in the device disclosed in Patent Literature 1, when an axial runout occurs in the rotor, the rotor comes into contact with the labyrinth packing and the rotor and the labyrinth packing are likely to be damaged.

The present invention was made in view of the above-described circumstances, and an objective of the present invention is to provide a nozzle structure having sufficient sealing performance and durability, and a steam turbine including the same.

### [Solution to Problem]

The present invention adopts the following means to accomplish the above-described objective.
A nozzle structure according to an aspect of the present invention is a nozzle structure provided in a gap between a rotor configured to rotate about an axis and a casing configured to surround the rotor from an outer peripheral side thereof, the nozzle structure including: an outer ring fixed to an inner peripheral surface of the casing and formed in an annular shape about the axis; an annular nozzle fixed to an inner radial side of the outer ring and having a blade section configured to guide a fluid in an axial direction; a labyrinth seal supported by the inner radial side of the nozzle to face an outer peripheral surface of the rotor and configured to seal a space between an inner peripheral surface of the nozzle and the outer peripheral surface of the rotor; and an elastic member provided between the nozzle and the labyrinth seal and configured to bias the labyrinth seal inward in a radial direction.

According to such a constitution, even when the rotor comes into contact with the labyrinth seal due to vibration thereof, the elastic member is elastically deformed outward in the radial direction so that a possibility of damage to the rotor or the labyrinth seal can be reduced.

Also, the nozzle structure according to an aspect of the present invention includes: a strength reinforcing section provided between the casing and the outer ring and configured to reinforce strength of the nozzle in the radial direction, wherein the outer ring may be fixed to the casing via the strength reinforcing section.

According to such a constitution, for example, even when a radial length of the nozzle structure is decreased when reducing a size of a device, the outer ring is attached to the casing via the strength reinforcing section to sufficiently secure the strength of the nozzle.

In the nozzle structure according to an aspect of the present invention, the outer ring may be fixed to the inner peripheral surface of the casing via the strength reinforcing section, and the strength reinforcing section may be an inner casing formed in an annular shape about the axis.

According to such a constitution, since most of a pressure component applied to the nozzle structure along the axis inside the case is received by the inner casing, the stress acting on the nozzle structure in the axial direction can be reduced.

In the nozzle structure according to an aspect of the present invention, the nozzle may include: a plurality of nozzle segment bodies arranged in a circumferential direction; and a welding bead configured to connect a pair of adjacent nozzle segment bodies in the circumferential direction.

According to such a constitution, since the nozzle is divided into the plurality of nozzle segment bodies, the nozzle structure can be more easily attached to the casing. In addition, the nozzle segment bodies are connected to each other using welding (the welding bead) in the circumferential direction. Thus, the nozzle segment bodies can be firmly fixed to each other.

In the nozzle structure according to an aspect of the present invention, both end surfaces of the labyrinth seal in the axial direction may be perpendicular to the axis.

According to such a constitution, for example, even when the radial length of the nozzle structure in the radial direction is decreased when reducing a size of a device, since both end surfaces of the labyrinth seal in the axial direction are perpendicular to the axis, a possibility of impairing sealing performance of the labyrinth seal can be reduced.

A rotary machine according to another aspect of the present invention includes the nozzle structure according to any one of the above-described aspects.

According to such a constitution, a steam turbine having sufficient sealing performance and durability can be provided.

### [Advantageous Effects of Invention]

According to a nozzle structure and a rotary machine of the present invention, a nozzle structure with sufficient sealing performance and durability and a steam turbine including the same can be provided.

### [Brief Description of Drawings]

Fig. 1 is a schematic diagram showing a steam turbine serving as a rotary machine according to an embodiment.
Fig. 2 is a diagram showing a nozzle structure according to the embodiment.
Fig. 3 is an enlarged diagram of a main portion in the nozzle structure according to the embodiment.

### [Description of Embodiments]

Hereinafter, a constitution of a nozzle structure 3 and a rotary machine 100 according to an embodiment of the present invention will be described on the basis of the drawings.

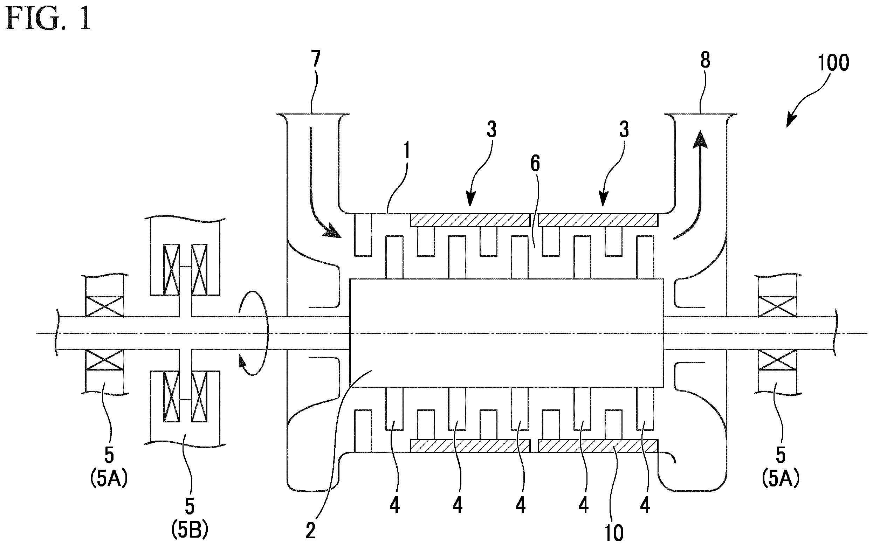

As shown in Fig. 1, a steam turbine 100 (the rotary machine 100) in the embodiment is an external combustion engine configured to take steam energy as rotational power and is used for electric power generators and the like in power plants.

To be specific, the steam turbine 100 includes a casing 1, a rotor 2 extending along an axis O to pass through the casing 1 and rotating about the axis O, a nozzle structure 3 (a vane) provided inside the casing 1, a blade train 4 provided in the rotor 2, and a bearing section 5 configured to support the rotor 2 to be rotatable about the axis.

A plurality of blade trains 4 are arranged on an outer peripheral surface of the rotor 2 in a direction of the axis O. Radial lengths of blades in the blade trains 4 located at an upstream side among the plurality of blade trains 4 are small. In other words, radial lengths of blades in the blade trains 4 located at a downstream side are large.

Also, a region in which the blade trains 4 in the rotor 2 are provided is covered from an outer peripheral side by the casing 1. Nozzle structures 3 are provided inside the casing 1 in a region corresponding to the blade trains 4 on the rotor 2 as will be described in detail below.

Constant gaps are formed between the nozzle structures 3 and the blade trains 4 so that the gaps are set to be a steam flow path 6. An external steam supply source (not shown) is connected to the steam flow path 6 via a steam inlet 7 provided at an upstream side of the casing 1. High temperature and high pressure steam flowing from the steam inlet 7 collides with the blade trains 4 while being flowing through the steam flow path 6 to rotate the rotor 2, and then is exhausted from an outlet 8 provided at the downstream side toward the outside.

Through holes are formed in both ends of the casing 1 in the direction along the axis O. Both ends of the rotor 2 protrude outside the casing 1 through the through holes. Both of the ends of the rotor 2 protruding from the casing 1 to the outside are rotatably supported by the bearing section 5. The bearing section 5 includes journal bearings 5A provided on both of the ends of the rotor 2 and a thrust bearing 5B provided on one end side of the rotor 2.

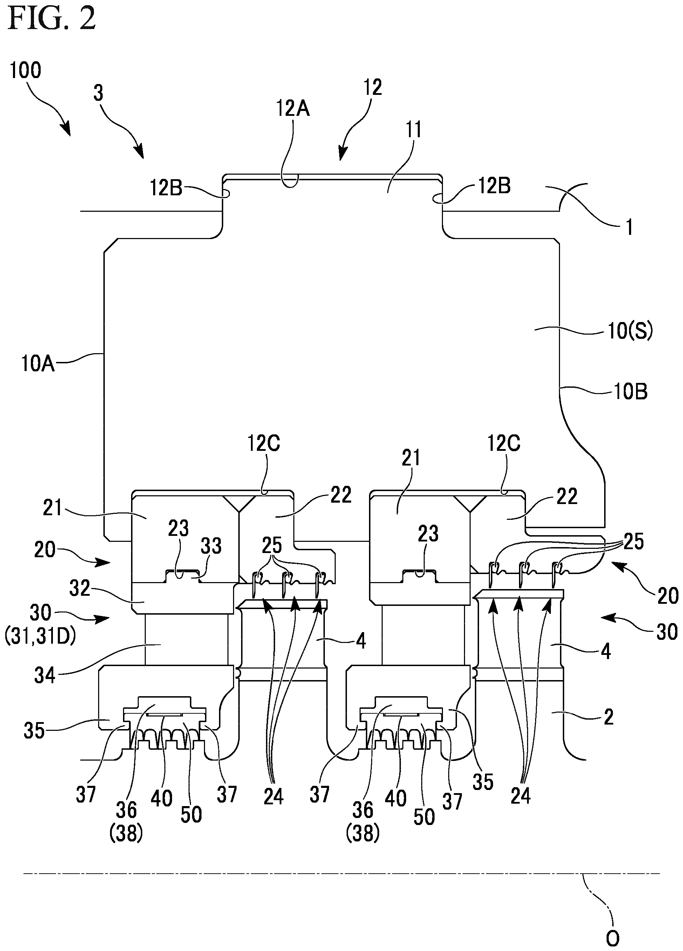

The nozzle structures 3 and the above-described blade trains 4 are alternately arranged inside the casing 1 in the direction of the axis O. To be specific, as shown in Fig. 2, each of the nozzle structures 3 includes an inner casing 10 provided on an inner peripheral surface of the casing 1 and a plurality of (two) nozzle units 30 arranged on an inner peripheral surface of the inner casing 10 in the direction of the axis O.

The inner casing 10 is an annular member extending along the inner peripheral surface of the casing 1. The nozzle units 30, which will be described below, are disposed at an inner radial side of the inner casing 10. In other words, the nozzle units 30 are supported by the inner casing 10, which serves as a strength reinforcing section S, from the outside in a radial direction so that strength thereof is reinforced.

An outer radial surface of the inner casing 10 is formed to protrude outward in the radial direction so that an attaching section 11 is formed. The attaching section 11 is fitted in an annular concave groove 12 provided in the inner peripheral surface of the casing 1 in a circumferential direction.

The concave groove 12 includes a concave groove bottom surface 12A forming an outer radial surface thereof and a pair of concave groove side surfaces 12B extending from the concave groove bottom surface 12A inward in the radial direction. A separation length between the pair of concave groove side surfaces 12B is substantially the same as a length of the above-described attaching section 11 in the direction of the axis O. In addition, in the embodiment, a gap is formed between the concave groove bottom surface 12A and an outer radial end surface of the attaching section 11.

In this way, the attaching section 11 is fitted in the concave groove 12 so that movement of the inner casing 10 in the direction of the axis O is restricted.

Two outer ring support grooves 12C arranged in the direction of the axis O are proved on the inner peripheral surface of the inner casing 10. The outer ring support grooves 12C are annular-shaped angular grooves provided to recede outward in the radial direction from the inner peripheral surface of the inner casing 10. The outer ring support grooves 12C apart from each other in the direction of the axis O. Two outer rings 20, which will be described below, are provided in the two outer ring support grooves 12C, respectively.

A surface facing an upstream side of the steam flow path 6 among both surfaces of the inner casing 10 in the direction of the axis O is set as an upstream side end surface 10A, and a surface facing a downstream side thereof is set as a downstream side end surface 10B. Both of the upstream side end surface 10A and the downstream side end surface 10B extend in a direction which is substantially perpendicular to the direction of the axis O.

Each of the nozzle units 30 includes the outer ring 20, a nozzle 31 provided inside the outer ring 20 in the radial direction, and a labyrinth seal 50 provided inside the nozzle 31 in the radial direction. Two nozzle units 30 arranged in the direction of the axis O merely have the different length in a part thereof and have the same shape as each other. Therefore, one of the nozzle units 30 will be representatively described in the following description.

The outer rings 20 are annular members supported by the outer ring support grooves 12C inside the casing 1. To be specific, as shown in Fig. 2, each of the outer rings 20 includes an outer ring main body 21 configured to support the nozzle 31, which will be described below, and a blade sealing ring 22 fixed to the outer ring main body 21 in the direction of the axis O.

The outer ring main body 21 has a radial length smaller than that of the above-described inner casing 10. Both surfaces of the outer ring main body 21 in the direction of the axis O extend in the direction which is substantially perpendicular to the direction of the axis O. In addition, a nozzle support groove 21A is formed in an inner radial surface of the outer ring main body 21. The nozzle support groove 21A is an annular-shaped angular groove formed to recede outward in the radial direction from an inner peripheral surface of the outer ring main body 21. Part of the nozzle 31, which will be described below, is fitted in the nozzle support groove 21A.

The blade sealing ring 22 is fixed to a downstream side surface of the above-described outer ring main body 21. An inner radial side of the blade sealing ring 22 at the downstream side is formed to protrude toward the downstream side so that a protruding section 33 is formed.

Also, a plurality of flow guides 24 arranged at intervals in the direction of the axis O are provided on an inner peripheral surface of the blade sealing ring 22. The flow guides 24 are members configured to face outer radial ends of the blades to guide flowing steam. Each of the flow guides 24 is formed of a thin plate extending inward in the radial direction from the inner peripheral surface of the blade sealing ring 22. The flow guides 24 are fixed to the inner peripheral surface of the blade sealing ring 22 using pins 25.

The outer ring main body 21 and the blade sealing ring 22 constituted as described above may be fixed to each other by performing, for example, welding or the like on end surfaces facing in the direction of the axis O. The sum of the lengths of the outer ring main body 21 and the blade sealing ring 22 in the direction of the axis O in a state in which the outer ring main body 21 and the blade sealing ring 22 are fixed to each other is substantially the same as the lengths of the above-described outer ring support grooves 12C in the direction of the axis O. Thus, the outer rings 20 are fitted in the outer ring support grooves 12C to be supported inside the casing 1.

The nozzle 31 includes an annular nozzle ring section 32 provided on an inner peripheral surface of the outer ring 20, a blade section 34 provided on an inner peripheral surface of the nozzle ring section 32, and an inner ring 35 provided on an inner peripheral surface of the blade section 34.

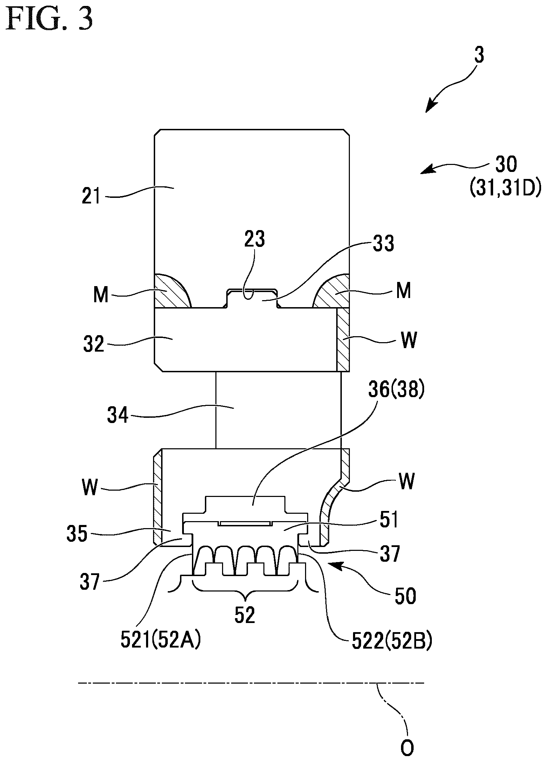

A nozzle attaching section 23 is provided on the outer peripheral surface of the nozzle ring section 32. The nozzle attaching section 23 is formed to protrude outward in the radial direction from the outer peripheral surface of the nozzle ring section 32. A length of the nozzle attaching section 23 in the direction of the axis O is substantially the same as a length of the above-described nozzle support groove 21A in the direction of the axis O. Thus, the nozzle attaching section 23 is fitted in the nozzle support groove 21A to support the nozzle 31. In addition, the nozzle ring section 32 and the outer ring 20 are joined to each other in a state in which the nozzle attaching section 23 is fitted in the nozzle support groove 21A using welding. To be specific, as shown in Fig. 3, the nozzle ring section 32 is joined to the outer ring 20 by performing buildup welding (at a buildup welding section M) on an inner radial portion of the outer ring 20 on both sides thereof in the direction of the axis O.

The blade section 34 is a member extending inward in the radial direction from the inner peripheral surface of the nozzle ring section 32 and having a blade profile cross section (not shown) when viewed in the radial direction. A plurality of blade sections 34 are arranged on the inner peripheral surfaces of the nozzle ring sections 32 at intervals in the circumferential direction. The blade sections 34 and the above-described blades (the blade trains 4) are disposed to overlap each other when viewed in the radial direction.

Steam serving as a working fluid of the steam turbine 100 is guided through such blade sections 34, collides with the blade trains 4, and rotates the rotor 2 about the axis O.

The inner ring 35 is provided on an inner radial edge of the blade section 34. The inner radial edge of the plurality of blade section 34 is supported by the inner ring 35.

The inner ring 35 is formed to have a substantially C-shaped cross section when viewed in the circumferential direction. The above-described blade section 34 is fixed to an outer peripheral surface of the inner ring 35. On the other hand, a sealing support groove 36 configured to support the labyrinth seal 50 is formed in the inner peripheral surface of the inner ring 35. The sealing support groove 36 is a grooves formed to recede outward in the radial direction from the inner peripheral surface of the inner ring 35. In other words, the sealing support groove 36 is open inward in the radial direction. Locking sections 37 protruding to approach each other in the direction of the axis O are formed at inner radial regions at both edges of the opening in the direction of the axis O.

A leaf spring accommodating groove 38 configured to accommodate a leaf spring 40 (which will be described below) serving as an elastic members 40 is formed in outer radial surfaces of the sealing support grooves 36. A length of the leaf spring accommodating groove 38 in the direction of the axis O is smaller than a length of the sealing support grooves 36 in the direction of the axis O.

The labyrinth seal 50 is a seal member formed of, for example, an alloy or the like including copper. The labyrinth seal 50 according to the embodiment includes a plate-like seal base 51 extending in the direction of the axis O and a plurality of thin-plate-like fins 52 extending inward in the radial direction from the seal base 51. Both edges of the seal base 51 in the direction of the axis O are engaged with the above-described locking sections 37 of the sealing support groove 36.

The fins 52 are formed such that lengths thereof in the direction of the axis O gradually decrease from outsides thereof toward insides thereof in the radial direction. In addition, two fins 52 located at both sides thereof in the direction of the axis O are an upstream fin 52A located at the uppermost stream side and a downstream fine 52B located at the lowermost stream side. Shapes of the upstream fin 52A and the downstream fine 52B are different from shapes of the other fins 52. In other words, an end surface 521 of the upstream fin 52A facing the upstream side is formed to be perpendicular to the direction of the axis O. Similarly, an end surface 522 of the downstream fine 52B facing the downstream side is formed to be perpendicular to the direction of the axis O. Note that the end surface 521 and the end surface 522 need not be completely perpendicular to the direction of the axis O and may intersect to be substantially perpendicular to the direction of the axis O.

The labyrinth seal 50 is accommodated in the sealing support groove 36 of the inner ring 35. On the other hand, the leaf spring 40 serving as the elastic member 40 is accommodated in the leaf spring accommodating groove 38. The leaf spring 40 is biased to press an outer radial surface of the seal base 51 in the labyrinth seal 50 toward an inner radial side thereof.

An elastic force toward the inner radial side is applied to the labyrinth seal 50 by the leaf spring 40, and the labyrinth seal 50 is supported at the inner radial side by the locking sections 37 in the inner ring 35. In this state, the plurality of fins 52 are supported inside the sealing support groove 36 by forming a slight gap in the radial direction from the outer peripheral surface of the rotor 2.

The nozzle 31 constituted as described above is constituted of a plurality of nozzle segment bodies 31D divided in the circumferential direction. The nozzle 31 is divided in accordance with the number of blade sections 34. In other words, the nozzle 31 having n blade sections 34 is divided into n nozzle segment bodies 31D.
adjacent to each other in the circumferential direction are joined to each other using welding. To be specific, as shown in Fig. 3, a joining section is formed by bringing both end surfaces of the inner ring 35 in the direction of the axis O and an downstream end surface of the nozzle ring section 32 in the nozzle segment bodie 31D into contact with them in another of the nozzle segment bodie 31D. A welding bead W is formed on the joining sections by performing welding on the joining section.

In the steam turbine 100 constituted as described above, steam supplied from the outside flows through the steam flow path 6 to rotate the rotor 2. Here, while the steam turbine 100 operates, vibrations occur in the rotor 2 in some cases. When such vibrations occur, the rotor 2 is slightly moved in the radial direction. The rotor 2 is moved in the radial direction and the rotor 2 comes into contact with the labyrinth seal 50. Here, since high stress is applied to the labyrinth seal 50 and the rotor 2 when the labyrinth seal 50 is fixed to the inner ring 35, the labyrinth seal 50 and the rotor 2 are likely to be damaged.

However, in the nozzle structure 3 and the steam turbine 100 according to the embodiment, the labyrinth seal 50 is supported by the leaf spring 40 serving as the elastic member 40. Thus, even when the rotor 2 comes into contact with the labyrinth seal 50, the labyrinth seal 50 is moved outward in the radial direction so that stress occurring between the rotor 2 and the labyrinth seal 50 can be decreased.

Also, when the rotor 2 operates at a normal position, a gap between the labyrinth seal 50 and the rotor 2 is maintained to be constant by the elastic restoring force of the leaf spring 40. Thus, sufficient sealing performance can be obtained.

According to the above-described constitution, since the inner ring 35 in the nozzle structure 3 is formed as a single body, it is advantageous in reducing a size of the steam turbine 100.

Particularly, when other members are additionally provided on the inner ring 35, a space in which the elastic member 40 is provided is likely to disappear due to a limitation on radial lengths of the nozzle structure 3. However, according to the above-described constitution, since the inner ring 35 is formed as a single body, the space in which the elastic member 40 is provided (the leaf spring accommodating groove 38) can be provided without impairing strength of the inner ring 35.

According to the above-described constitution, since most of a pressure component applied to the nozzle structure 3 in the direction of the axis O inside the casing 1 is received by the upstream side end surface 10A in the inner casing 10, a ratio of stresses acting on the nozzle structure 3 in the direction of the axis O can be reduced. Thus, durability of the nozzle structure 3 and the steam turbine 100 can be improved.

According to the above-described constitution, for example, even when a length of the nozzle structure 3 in the radial direction is decreased when reducing a size of a device, the outer ring 20 is attached to the casing 1 via the strength reinforcing section S so that strength of the nozzle 31 in the radial direction can be sufficiently secured.

According to the above-described constitution, since the nozzle 31 is divided into the plurality of nozzle segment bodies 31D, the nozzle structure 3 can be more easily attached to the casing 1. In addition, the nozzle segment bodies 31D can be firmly fixed using the welding bead W.

According to the above-described constitution, for example, even when the length of the nozzle structure 3 in the radial direction is decreased when reducing a size of a device, since both end surfaces of the labyrinth seal 50 in the direction of the axis O are perpendicular to the axis O, the labyrinth seal 50 can be easily attached to the seal accommodation groove. Thus, the possibility of impairing sealing performance of the labyrinth seal 50 can be reduced.

Although the embodiment of the present invention has been described in detail above with reference to the drawings, specific constitutions are not limited to such an embodiment and design changes and the like are also included without departing from the gist of the present invention.

### [Industrial Applicability]

A nozzle structure 3 according to the present invention can be applied to a rotary machine such as a steam turbine 100.

### [Reference Signs List]

100 Rotary machine (steam turbine)
1 Casing
2 Rotor
3 Nozzle structure
4 Blade train
5 Bearing section
6 Steam flow path
7 Steam inlet
8 Outlet
10 Inner casing
10A Upstream side end surface
10B Downstream side end surface
11 Attaching section
12 Concave groove
12A Concave groove bottom surface
12B Concave groove side surface
12C Outer ring support groove
20 Outer ring
21 Outer ring main body
21ANozzle support groove
22 Blade sealing ring
23 Nozzle attaching section
24 Flow guide
25 Pin
30 Nozzle unit
31 Nozzle
31D Nozzle segment body
32 Nozzle ring section
33 Protruding section
34 Blade section
35 Inner ring
36 Sealing support groove
37 Locking section
38 Leaf spring accommodating groove
40 Elastic member
40 Leaf spring
50 Labyrinth seal
51 Seal base
5A Journal bearings
5B Thrust bearing
52 Fin
52A Upstream fin
52B Downstream fin
M Buildup welding section
S Strength reinforcing section
W Welding bead

## Claims

1. A nozzle structure (3) provided in a gap between a rotor (2) configured to rotate about an axis and a casing (1) configured to surround the rotor (2) from an outer peripheral side thereof, the nozzle structure (3) comprising:
a plurality of outer rings (20) arranged in an axial direction along an inner peripheral surface of the casing and formed in an annular shape about the axis;
a plurality of annular nozzles (31) fixed to an inner radial side of the plurality of outer rings (20), having a blade sections (34) configured to guide a fluid in the axial direction, and arranged in the axial direction, a labyrinth seal (50) supported by the inner radial side of the plurality of annular nozzles (31) to face an outer peripheral surface of the rotor (2) and configured to seal a space between an inner peripheral surface of the plurality of annular nozzles (31) an the outer peripheral surface of the rotor (2) and an elastic member (40) provided between the plurality of annular nozzles (31) and the labyrinth seal (50) and configured to bias the labyrinth seal inward in a radial direction, **characterized by** comprising:
an inner casing (10) serving as a strength reinforcing section provided between the casing and the plurality of outer rings (20) such that the inner casing (10) comes to contact with all of the plurality of the outer rings (20), formed in an annular shape about the axis, and configured to reinforce strength of the plurality of annular nozzles (31) in the radial direction.

2. The nozzle structure according to claim 1, wherein the plurality of annular nozzles (31) includes:
a plurality of nozzle segment bodies (31D) arranged in a circumferential direction; and
a welding bead (W) configured to connect a pair of adjacent nozzle segment bodies (31D) in the circumferential direction.

3. The nozzle structure according to claim 1 or 2, wherein both end surfaces of the labyrinth seal (50) in the axial direction are perpendicular to the axis.

4. A rotary machine comprising:
the nozzle structure according to any one of claims 1 to 3.

## Patentansprüche

1. Leitschaufelstruktur (3), die vorgesehen ist in einem Spalt zwischen einem Rotor (2), der ausgestaltet ist, um um eine Achse zu rotieren und einem Gehäuse (1), das ausgestaltet ist, um den Rotor (2) um seine äußere Umfangsseite zu umgeben, wobei die Leitschaufelstruktur (3) aufweist:
mehrere äußere Ringe (20), die in einer axialen Richtung entlang einer inneren Umfangsfläche des Gehäuses angeordnet und in einer Ringform um die Achse ausgebildet sind;
mehrere ringförmige Leitschaufeln (31), die an einer inneren radialen Seite der mehreren äußeren Ringe (20) befestigt sind, und Schaufelabschnitte (34) haben, die zum Führen eines Fluids in der axialen Richtung ausgestaltet sind und in der axialen Richtung angeordnet sind, mit einer Labyrinthdichtung (50), die von der inneren radialen Seite der mehreren ringförmigen Leitschaufeln (31) getragen wird, um zu einer äußeren Umfangsfläche des Rotors (2) zu weisen und ausgestaltet ist, um einen Raum zwischen einer inneren Umfangsfläche der mehreren ringförmigen Leitschaufeln (31) und der äußeren Umfangsfläche des Rotors (2) abzudichten und wobei ein elastisches Teil (40) zwischen den mehreren ringförmigen Leitschaufeln (31) und der Labyrinthdichtung (50) vorgesehen ist und ausgestaltet ist, um die Labyrinthdichtung, in einer radialen Richtung nach innen, vorzuspannen, **dadurch gekennzeichnet, dass** sie aufweist:
ein inneres Gehäuse (10), das als Festigkeit verstärkender Abschnitt dient und zwischen dem Gehäuse und den mehreren äußeren Ringen (20) derart vorgesehen ist, dass das innere Gehäuse (10) in Kontakt gelangt mit all den mehreren äußeren Ringen (20), die in einer Ringform um die Achse ausgebildet sind und ausgestaltet sind, um die Festigkeit der mehreren ringförmigen Leitschaufeln (31) in der radialen Richtung zu verstärken.

2. Leitschaufelstruktur nach Anspruch 1, wobei die mehreren ringförmigen Leitschaufeln (31) aufweisen:
mehrere Leitschaufelsegmentkörper (31D), die in einer umfänglichen Richtung angeordnet sind, und
eine Schweißwulst (W), die ausgestaltet ist, um ein Paar angrenzender Leitschaufelsegmentkörper (31D) in der Umfangsrichtung zu verbinden.

3. Leitschaufelstruktur nach Anspruch 1 oder 2, wobei beide Endoberflächen der Labyrinthdichtung (50) in der axialen Richtung senkrecht zu der Achse sind.

4. Rotationsmaschine, umfassend:
die Leitschaufelstruktur nach einem der Ansprüche 1 bis 3.

## Revendications

1. Structure de buse (3) située dans un espace entre un rotor (2) configuré pour tourner autour d'un axe et un carter (1) configuré pour entourer le rotor (2) depuis un côté périphérique extérieur de celui-ci, la structure de buse (3) comprenant :
une pluralité de bagues extérieures (20) agencées dans une direction axiale le long d'une surface périphérique intérieure du carter et formées selon une forme annulaire autour de l'axe ;
une pluralité de buses annulaires (31) fixées à un côté radial intérieur de la pluralité de bagues extérieures (20), ayant une section aube (34) configurée pour guider un fluide dans la direction axiale, et agencées dans la direction axiale, un joint à labyrinthe (50) supporté par le côté radial intérieur de la pluralité de buses annulaires (31) pour faire face à une surface périphérique extérieure du rotor (2) et configuré pour rendre étanche un espace entre une surface périphérique intérieure de la pluralité de buses annulaires (31) et la surface périphérique extérieure du rotor (2) et un élément élastique (40) situé entre la pluralité de buses annulaires (31) et le joint à labyrinthe (50) et configuré pour solliciter le joint à labyrinthe vers l'intérieur dans une direction radiale, **caractérisée en ce qu'**elle comprend :
un carter intérieur (10) servant de section de renforcement de résistance située entre le carter et la pluralité de bagues extérieures (20) de telle sorte que le carter intérieur (10) vient en contact avec la totalité de la pluralité de bagues extérieures (20), formées selon une forme annulaire autour de l'axe, et configuré pour renforcer la résistance de la pluralité de buses annulaires (31) dans la direction radiale.

2. Structure de buse selon la revendication 1, dans laquelle la pluralité de buses annulaires (31) inclut :
une pluralité de corps de segment de buse (31D) agencés dans une direction circonférentielle ; et
une perle de soudure (W) configurée pour relier une paire de corps de segment de buse (31D) adjacents dans la direction circonférentielle.

3. Structure de buse selon la revendication 1 ou 2, dans laquelle les deux surfaces d'extrémité du joint à labyrinthe (50) dans la direction axiale sont perpendiculaires à l'axe.

4. Machine rotative comprenant :
la structure de buse selon l'une quelconque des revendications 1 à 3.
